(19) Europäisches Patentamt / European Patent Office / Office européen des brevets

(11) **EP 4 047 533 A1**

(12) **EUROPÄISCHE PATENTANMELDUNG**

(43) Veröffentlichungstag:
**24.08.2022   Patentblatt 2022/34**

(21) Anmeldenummer: **21157551.9**

(22) Anmeldetag: **17.02.2021**

(51) Internationale Patentklassifikation (IPC):
**G06Q 10/04** (2012.01)    **G06Q 50/30** (2012.01)

(52) Gemeinsame Patentklassifikation (CPC):
**G06Q 10/04; G06Q 50/30**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Mobility GmbH**
**81739 München (DE)**

(72) Erfinder: **Erhard, Karl-Heinz**
**38126 Braunschweig (DE)**

(54) **VERFAHREN ZUM AUTOMATISCHEN ERSTELLEN EINES NICHTZYKLISCHEN FAHRPLANS**

(57)      Gegenstand der Erfindung ist ein Verfahren zum rechnergestützten Erstellen eines nichtzyklischen aus einer Anzahl Einzelfahrten (EF1 ... EF3) bestehenden Fahrplans für ein öffentliches Verkehrsmittel (OEV), bei dem die Stationen (A...E) einer Linie (LN) des öffentlichen Verkehrsmittels (OEV) berücksichtigt werden. Eine ganzzahlige lineare Optimierung wird durchgeführt, wobei zur Durchführung ein Ganzzahliges Lineares Programm verwendet wird, welches als Zielfunktionen die Einzelfahrten (EF1 ... EF3) und die bei den Einzelfahrten (EF1 ... EF3) zurückgelegten Fahrkilometer, eine Anzahl von jeweils zu einem Startzeitpunkt von einer der Stationen (A ... E) zu einer anderen der Stationen (A ... E) fließenden Passagierströmen (PS1 ... PS5) und die in den Passagierströmen (PS1 ... PS5) jeweils enthaltene Passagierzahl ($p_{ij}$) berücksichtigt. Als Parameter wird eine maximale Wartezeit (dw) für Passagiere verwendet, indem für potenzielle Einzelfahrten (EF1 ... EF3) geprüft wird, ob die betreffende Einzelfahrt (EF1 ... EF3) genutzt wird. Diese wird nur dann weiter betrachtet, wenn sie genutzt wird, und indem für jeden Passagierstrom (PS1 ... PS5) geprüft wird, ob der Passagierstrom (PS1 ... PS5) vollständig auf der betrachteten Einzelfahrt (EF1 ... EF3) liegt, und die geplante Abfahrtszeit der betrachteten Einzelfahrt (EF1 ... EF3) an der betreffenden Station (A ... E) vor einem Einstiegszeitpunkt ($t_j$ + dw), die sich aus dem Startzeitpunkt eines betrachteten Passagierstroms (PS1 ... PS5) zuzüglich der maximalen Wartezeit für Passagiere ergibt, liegt. Der Passagierstrom (PS1 ... PS5) wird nur dann der Einzelfahrt (EF1 ... EF3) zugeordnet. Jeder der Passagierströme (PS1 ... PS5) wird mindestens einer Einzelfahrt (EF1 ... EF3) zugeordnet. Ferner umfasst die Erfindung ein Computerprogrammprodukt sowie eine Bereitstellungsvorrichtung für das Computerprogrammprodukt.

FIG 2

**Beschreibung**

Die Erfindung betrifft Verfahren zum rechnergestützten Erstellen eines nichtzyklischen aus einer Anzahl Einzelfahrten bestehenden Fahrplans für ein öffentliches Verkehrsmittel, bei dem die Stationen einer Linie des öffentlichen Verkehrsmittels berücksichtigt werden. Außerdem betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Fahrpläne für Nahverkehrsbetriebe (z.B. U-Bahnen) werden oftmals mit festen Takten für einen bestimmten Betriebstag geplant, z.B. zwei dichte Takte für die beiden Stoßzeiten vormittags und nachmittags sowie drei dünne Takte außerhalb der Stoßzeiten. Ein solcher Tagesfahrplan wird i.a. für jeden Werktag gleichermaßen verwendet. Am Wochenende gibt es spezielle Fahrpläne mit weniger Taktwechseln.

Diese Vorgehensweise hat den Nachteil, dass der Fahrplan an das tatsächliche Passagieraufkommen nicht angepasst ist: Somit kommt es bei höherem Passagieraufkommen zu überfüllten Zügen und längeren Wartezeiten für Passagiere. Bei niedrigerem Passagieraufkommen werden Züge nicht ausgelastet, und es kommt zu unnötig hohen Betriebskosten (zu viele Fahrzeuge und Personal im Einsatz, zu viele Fahrtkilometer).

Ein Verfahren zum rechnergestützten Erstellen eines Fahrplans ist in dem Artikel Keping Li et al., "Metro Timetabling for Time-Varying Passenger Demand and Congestion at Stations", Hindawi Journal of Advanced Transportation, 2018 beschrieben. Es wird der Versuch unternommen, bei der Erstellung des Fahrplans betreiberspezifische Belange und passagierorientierte Größen gleichzeitig zu berücksichtigen. Ein Optimierungsalgorithmus berücksichtigt dabei ein Modell für die dynamische Entwicklung von Passagierflüssen in den Zügen und auf den Stationen. Dabei werden allerdings vereinfachende Annahmen berücksichtigt, die in der Realität auftretende Probleme nicht berücksichtigen. Beispielsweise wird angenommen, dass die Anzahl der wartenden Passagiere immer unter der Aufnahmekapazität des einfahrenden Zuges liegt.

Die Aufgabe der Erfindung liegt darin, ein Verfahren zum rechnergestützten Erstellen eines nichtzyklischen aus einer Anzahl Einzelfahrten bestehenden Fahrplans für ein öffentliches Verkehrsmittel anzugeben, mit dem sich ein an die realen Anforderungen möglichst gut angepasster Fahrplan automatisch erstellen lässt. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass eine ganzzahlige lineare Optimierung durchgeführt wird, wobei zur Durchführung ein Ganzzahliges Lineares Programm verwendet wird, welches als Zielfunktionen

- die Einzelfahrten und die bei den Einzelfahrten zurückgelegten Fahrkilometer,
- eine Anzahl von jeweils zu einem Startzeitpunkt von einer der Stationen zu einer anderen der Stationen fließenden Passagierströmen und die in den Passagierströmen jeweils enthaltene Passagierzahl ($p_{ij}$)

berücksichtigt, wobei als Parameter eine maximale Wartezeit (dw) für Passagiere verwendet wird, indem für potenzielle Einzelfahrten geprüft wird,

- ob die betreffende Einzelfahrt genutzt wird,
- wobei diese nur dann weiter betrachtet wird, wenn sie genutzt wird,

und indem für jeden Passagierstrom geprüft wird, ob

- der Passagierstrom vollständig auf der betrachteten Einzelfahrt liegt, und
- die geplante Abfahrtszeit der betrachteten Einzelfahrt an der betreffenden Station vor einem Einstiegszeitpunkt ($t_j$ + dw), die sich aus dem Startzeitpunkt eines betrachteten Passagierstroms zuzüglich der maximalen Wartezeit für Passagiere ergibt, liegt,
- wobei der Passagierstrom nur dann der Einzelfahrt zugeordnet wird,

wobei jeder der Passagierströme mindestens einer Einzelfahrt zugeordnet wird.

Die Erfindung löst somit das technische Problem, einen aus Einzelfahrten bestehenden Fahrplan, beispielsweise einen kompletten Tagesfahrplan für Nahverkehrsbetriebe auf Basis eines vorgegebenen Passagierbedarfs rechnergestützt zu berechnen und bezüglich verschiedener Zielfunktionen zu optimieren. Der Passagierbedarf wird erfindungsgemäß in Form einer zeitabhängigen Quelle-Ziel-Matrix definiert, d.h. wie viele Passagiere möchten zu einem bestimmten Zeitpunkt von einer Startstation zu einer Zielstation reisen. Als zu minimierende Zielfunktionen werden die Summe der Fahrtkilometer, die Anzahl der Fahrzeuge sowie die Summe der Wartezeiten über alle zu befördernden Passagiere betrachtet. Als Ergebnis der Berechnung erhält man beispielsweise einen Tagesfahrplan, der an das prognostizierte Passagieraufkommen optimal angepasst ist. Die Qualität der Näherung wird davon bestimmt, wie gut die Zielfunktion die tatsächlichen Vorgänge beschreibt, wie hoch der Rechenaufwand ist, der in die Minimierung der Zielfunktion investiert werden soll, und wie stark das prognostizierte Passagieraufkommen mit dem tatsächlichen übereinstimmt.

Das Problem wird erfindungsgemäß durch Modelle und Methoden der Mathematischen Optimierung gelöst. Dazu wird ein ILP (Integer Linear Program) generiert, wobei der Begriff "Programm" im Sinne von Planung zu verstehen ist und nicht im Sinne eines Computerprogramms. Er wurde schon in den 1940er Jahren geprägt, bevor Computer zur Lösung von Optimierungsproblemen eingesetzt wurden. Das erzeugte ILP kann mit Hilfe kommerzieller LP-Solver (z.B. Gurobi) mit hoher Güte gelöst werden (hierzu im Folgenden noch mehr).

Beispielsweise kann eine gemischte Zielfunktion erstellt werden (gewichtete Summe aus Fahrtkilometern, Fahrzeuganzahl und Passagierwartezeiten). Diese kann diverse Nebenbedingungen umfassen, welche ein zulässiger Fahrplan erfüllen muss und die als Parameter berücksichtigt werden können. Da ein einziges ILP für den Fahrplan, beispielsweise für einen kompletten Betriebstag (Tagesfahrplan) erzeugt wird, wird der Fahrplan als Ganzes optimiert, was insbesondere auch die diffizilen Übergänge bei schwankendem Passagieraufkommen in geeigneter Weise mitberücksichtigt.

Das erfindungsgemäße Verfahren kann verwendet werden, um bei bekannten bzw. prognostizierten Passagierströmen einen Fahrplan als Grundlage für einen Betrieb des öffentlichen Verkehrsmittels zu erstellen. In diesem Fall wird das Verfahren angewendet, um einen auf die zu erwartenden Passagierzahlen angepassten Fahrplan im Voraus bereitzustellen.

Das erfindungsgemäße Verfahren kann jedoch auch dazu verwendet werden, um einen Fahrplan dynamisch an eine aktuelle Situation des Passagieraufkommens anzupassen. In diesen Anwendungsfall fließen aktuell bestimmte Passagierströme ein, die durch eine Analyse der augenblicklichen Transportsituation erstellt werden. Dabei können Messwerte (zum Beispiel Passagierzählung) oder Erfahrungswerte (bekannte Sondersituation wie zum Beispiel ein Fußballspiel) berücksichtigt werden.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen. Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder auch als Messwerte. Die erforderlichen Anweisungen Programmbefehle sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten und/oder Softwarekomponenten über Schnittstellen.

Gemäß einer Ausgestaltung der Erfindung ist vorgesehen, dass als Parameter ein Basiszeitabstand (dt) zwischen potenziellen Einzelfahrten berücksichtigt wird, wobei potenzielle Einzelfahrten den Basiszeitabstand oder ein ganzzahliges Vielfaches davon aufweisen.

Durch Berücksichtigung des Basiszeitabstand wird vorteilhaft eine zusätzliche Linearisierung des Problems erreicht. Dies bewirkt, dass der Rechenaufwand bei der Optimierung des ganzzahligen linearen Programms verringert wird. Deswegen können Fahrpläne in kürzerer Zeit erstellt werden oder es ist bei gleicher Rechenzeit die Lösung komplexerer Probleme hinsichtlich der Passagierströme möglich.

Gemäß einer Ausgestaltung der Erfindung ist vorgesehen, dass der Fahrplan hinsichtlich der minimalen Gesamtlänge der Summe aller Einzelfahrten optimiert wird.

Hierdurch wird vorteilhaft bei der Lösung des ILP ein weiteres Optimierungskriterium berücksichtigt. Dieses Optimierungskriterium ist auf eine möglichst effektive Nutzung der Ressourcen des Betreibers öffentlichen Verkehrsmittels ausgerichtet.

Insgesamt kann gesagt werden, dass eine minimale Gesamtlänge der Summe aller Einzelfahrten dazu führt, dass die Fahrzeuge des öffentlichen Verkehrsmittels in Bezug auf die Randbedingungen (Fahrgastaufkommen, maximal zulässige Wartezeit der Passagiere) optimal gefüllt sind. Hierdurch lässt sich vorteilhaft beispielsweise der Energieverbrauch und der Personalaufwand minimieren, was die Ökobilanz und die Betriebskosten gleichermaßen verbessert. Eine Optimierungsgrenze liegt selbstverständlich in der Obergrenze der verfügbaren Fahrzeuge, die gleichzeitig im Einsatz sein können. Dies kann sowohl durch die Anzahl der Fahrzeuge als auch durch die Streckenkapazität vorgegeben sein.

Gemäß einer Ausgestaltung der Erfindung ist vorgesehen, dass beide Richtungen einer Linie berücksichtigt werden, wobei bei der Berücksichtigung der Passagierströme geprüft wird, welche Richtung diese aufweisen.

Üblicherweise sind Linien eines öffentlichen Verkehrsmittels derart aufgebaut, dass diese in beide Richtungen befahren werden können (Ausnahmen bestehen beispielsweise bei einem Ringbetrieb, bei denen die Fahrzeuge des öffentlichen Verkehrsmittels sozusagen im Kreis fahren). Grundsätzlich ist es auch möglich, bei der Erstellung des Fahrplans lediglich eine Richtung der Linie zu betrachten. Die gleichzeitige Berücksichtigung beider Richtungen hat allerdings den Vorteil, dass eine Verfügbarkeit von Fahrzeugen besser geplant werden kann. Beispielsweise kann ein unterschiedlich hohes Passagieraufkommen in den Richtungen dazu führen, dass in die Richtung des geringeren Passagieraufkommens Leerfahrten eingeschoben werden müssen, um eine gleichmäßige Verteilung von Fahrzeugen für beide Richtungen zu gewährleisten (zu Leerfahrten im Folgenden noch mehr).

Gemäß einer Ausgestaltung der Erfindung ist vorgesehen, dass zusätzlich zu den Einzelfahrten auch Leerfahrten ohne Passagiere berücksichtigt werden.

Als Lösungsraum werden vorteilhaft neben potenziellen Einzelfahrten mit Passagieren (im Folgenden auch als Nutzfahrten bezeichnet) im Lösungsraum zusätzlich potenzielle Leerfahrten ohne Passagiere (An den Stationen durchfahrende Fahrzeuge, Verbindungsfahrten in Wendeanlagen sowie Auf- und Abstellfahrten bezüglich Depots) im Lösungsraum des ILP berücksichtigt. Somit werden Nutz- und Leerfahrten simultan optimiert, was zu einer besonders hohen Qualität des resultierenden Fahrplans führt. Durch gleichzeitige Planung der Leerfahrten kann nämlich die Verfügbarkeit der Fahrzeuge bei hoher Nachfrage (an einem bestimmten Ort zu einer bestimmten Zeit) verbessert werden. Es kommt somit vorteilhaft nicht zu vermeidbaren Engpässen bei der Verfügbarkeit der Fahrzeuge (unvermeidbare Engpässe, wenn die Kapazitätsgrenzen des öffentlichen Verkehrsmittels erreicht sind, lassen sich natürlich nicht vermeiden, aber maximal hinauszögern) .

Gemäß einer Ausgestaltung der Erfindung ist vorgesehen, dass als Zielfunktion zusätzlich die Anzahl von zur Verfügung stehenden Fahrzeugen berücksichtigt wird.

Fahrpläne mit derselben Anzahl von Nutzfahrten können nämlich unterschiedliche Fahrzeuganzahlen erfordern, je nachdem wie gut das Timing der Fahrten ist. Z. B. muss man zusätzliche Züge einsetzen, wenn Zugumläufe zwischen Hin- und Rückfahrten verpasst werden, wobei Zugumläufe die Abfolge von Nutz- und/oder Leerfahrten für einen bestimmten Zug darstellen. Daher ist die die Zuganzahl als eigenständige Zielfunktion vorteilhaft, um Kosten für Züge und Personal zu minimieren. Eine gewisse Korrelation besteht zwar auch zwischen Fahrtanzahl und Zuganzahl, aber die primäre Korrelation besteht zwischen Fahrtanzahl und Fahrtkilometer (beeinflusst, wie schon erwähnt, die Kosten für den Fahrbetrieb, z.B. Energiebedarf, Personal)

Gemäß einer Ausgestaltung der Erfindung ist vorgesehen, dass das Auffinden eines Optimums durch einen Solver, insbesondere einen Gurobi-Solver durchgeführt wird.

Solver sind Programme, die für die Lösung spezieller Probleme programmiert wurden. Solver können als eigenständiges Softwarepaket existieren oder als Programmbibliothek in andere Softwaresysteme integriert sein. Zur Problemlösung werden sie in eine Umgebung eingebettet, die das Problem beschreibt und die Randbedingungen des zu lösenden Problems vorgibt, beispielsweise ein Programm zur Erstellung eines Fahrplans.

Gurobi ist ein Solver, um numerische Programmieraufgaben zu lösen. Unterstützt werden lineare Programmierung (LP), quadratische Programmierung (QP), Programmierung mit quadratischen Nebenbedingungen (QCP), gemischt-ganzzahlige lineare Programmierung (MILP), gemischt-ganzzahlige quadratische Programmierung (MIQP) und gemischt-ganzzahlige Programmierung mit quadratischen Nebenbedingungen (MIQCP). Verglichen mit anderen Solvern kann Gurobi am meisten Benchmark-Probleme lösen und benötigt pro Problem vergleichsweise wenig Zeit.

Selbstverständlich ist Gurobi an dieser Stelle nur als Beispiel angeführt, andere Solver können alternativ Verwendung finden. Der Vorteil dieser Solver ist neben der effizienten Lösung komplexer Optimierungsprobleme die Ausgabe unterer Schranken, so dass die Lösungsqualität bekannt ist, selbst wenn das globale Optimum aufgrund beschränkter Rechenzeiten nicht erreicht wird.

Gemäß einer Ausgestaltung der Erfindung ist vorgesehen, dass als Fahrplan ein Tagesfahrplan erstellt wird.

Ein Tagesfahrplan umfasst die Aktivitäten auf der betrachteten Linie innerhalb von 24 Stunden oder in einem vorgegebenen Zeitfenster, welches als Teil des Tages berücksichtigt wird (beispielsweise wegen einer betriebsfreien Zeitspanne in der Nacht). Die Erstellung eines Tagesfahrplans hat den Vorteil, dass Fahrten unter Berücksichtigung des Passagieraufkommens ganzheitlich für den betreffenden Tag geplant werden können. In der Nacht kann ein Betriebsschluss (der auch das Ende des Fahrplans bedeutet) oder zumindest ein Nachbetrieb mit deutlich verringerter Frequenz an Fahrzeugen genutzt werden, um für den Fahrplan des folgenden Tags eine definierte Ausgangsposition zu schaffen. Damit ist gemeint, dass die Fahrzeuge an ihren Ausgangspositionen zum gewünschten Zeitpunkt verfügbar sind. Damit können die zu erwartenden Entwicklungen des Fahrgastaufkommens als Passagierströme unter Berücksichtigung der zuverlässig zur Verfügung stehenden Ressourcen bei der Erstellung des (nächsten) Tagesfahrplans berücksichtigt werden.

Es ist besonders vorteilhaft, wenn bei der Erstellung des Tagesfahrplans der Wochentag, für den dieser gilt, Berücksichtigung findet. Unterschiedliche Fahrgastaufkommen sind beispielsweise an Wochentagen im Vergleich zu Wochenenden und Feiertagen zu erwarten. An Freitagen setzt beispielsweise der nachmittägliche Berufsverkehr früher ein als an anderen Wochentagen. Freitags und samstags ist beispielsweise das Passagieraufkommen am Abend und in der Nacht größer als an anderen Tagen.

Gemäß einer Ausgestaltung der Erfindung ist vorgesehen, dass die Passagierströme unter Berücksichtigung von Umsteigebeziehungen zu anderen Linien des öffentlichen Verkehrs ermittelt werden.

Umsteigebeziehungen geben vorteilhaft zusätzliche Hinweise, die es ermöglichen, Passagierflüsse besser zu planen. Dies kann sowohl vorab bei der Planung des Fahrplans erfolgen (beispielsweise, weil die Ankunft eines anderen Verkehrsmittels wie eines Regionalzugs an einer Umsteigestation der Linie, dessen Fahrplan erstellt werden soll, bekannt ist) als auch bei einer dynamischen Anpassung des Fahrplans (beispielsweise bei sich die Ankunft des genannten anderen Verkehrsmittels an der Umsteigestation verzögert). In jedem Fall gelingt es besser, die Passagierströme zu planen und damit einen auf das Passagieraufkommen angepassten Fahrplan anzubieten.

Gemäß einer Ausgestaltung der Erfindung ist vorgesehen, dass Fahrzeuge unterschiedlichen Typs auf der Linie berücksichtigt werden.

Die Fahrzeuge unterschiedlichen Typs können insbesondere eine unterschiedliche Fahrgastkapazität aufweisen (beispielsweise Kurzzüge und Langzüge). Damit ermöglicht die Berücksichtigung der unterschiedlichen Typen von Fahrzeugen eine genauere Kapazitätsplanung, wie viele Passagiere bei einem Halt an einer Station der Linie aufgenommen werden können und ob dies für einen betrachteten Passagierstrom ausreicht. Auch ist eine flexiblere Planung des Fahrplans möglich, wenn in Zeiten kleinerer Passagierströme auch Fahrzeuge mit einer geringeren Passagierkapazität eingesetzt werden können. Hierdurch können beispielsweise der Energieverbrauch im Betrieb und damit auch die Betriebskosten gesenkt werden.

Gemäß einer Ausgestaltung der Erfindung ist vorgesehen, dass das Erstellen des Fahrplans während des Ablaufens eines bestehenden Fahrplans unter Berücksichtigung aktuell gemessener oder geschätzter Passagierströme durchgeführt wird.

Die Vorteile dieser Ausgestaltung der Erfindung sind bereits genannt worden. Es ist die Erstellung von dynamischen Fahrplänen möglich, d. h. von Fahrplänen, die an ungeplante Änderungen im Fahrgastaufkommen und damit an von der Planung abweichende Passagierströme angepasst werden können.

Um eine Neuberechnung zu veranlassen, müssen gemäß einer Alternative der Erfindung die Abweichungen einen vorher festgelegten Grenzwert überschreiten. Auf diese Weise wird sichergestellt, dass der mit einer Neuberechnung verbundene Mehraufwand nur in Kauf genommen wird, wenn aufgrund der Größe der Abweichungen die Aussicht auf die Möglichkeit einer spürbaren Verbesserung des Fahrplans gegeben ist.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugzeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:

Figur 1 ein Ausführungsbeispiel einer Computer-Infrastruktur als Blockschaltbild, wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,

Figur 2 ein Ausführungsbeispiel eines Fahrplans, dargestellt in einem Weg-Zeit-Diagramm (Weg s und Zeit t).

Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind,

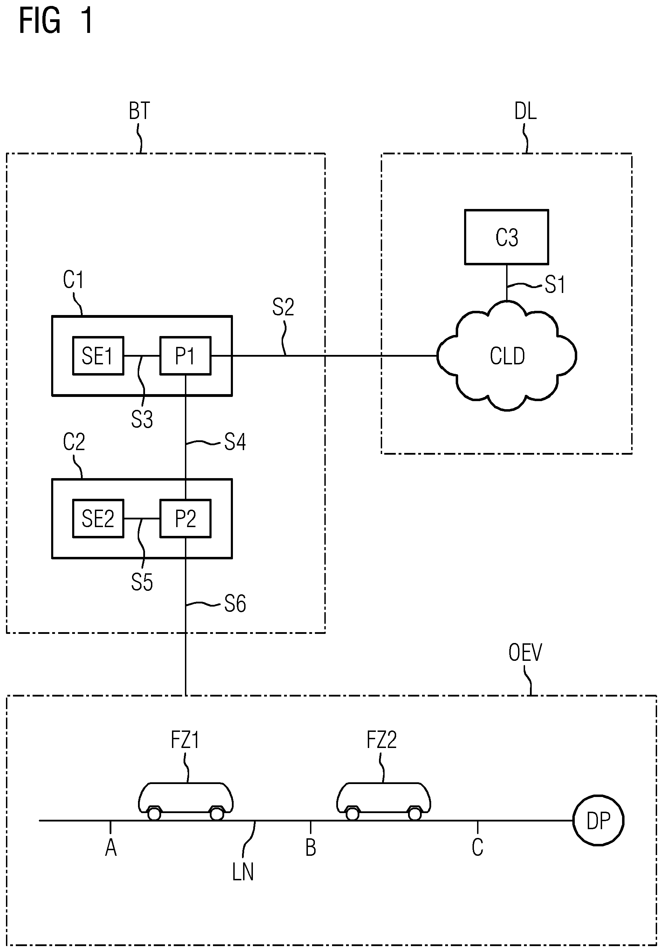

In Figur 1 ist ein öffentliches Verkehrsmittel OEV dargestellt, was von einem Betreiber BT betrieben wird. Außerdem gibt es einen Dienstleister DL, der, wie im Folgenden näher beschrieben wird, über eine Cloud CLD Berechnungen als Dienstleister anbietet.

Das öffentliche Verkehrsmittel OEV besteht stellvertretend aus einer Linie LN (selbstverständlich können auch nicht dargestellte weitere Linien vorhanden sein) und einem Depot DP, in dem Fahrzeuge FZ1, FZ2 abgestellt werden können. Diese Fahrzeuge befahren außerdem die Linie LN zwischen Stationen A, B, C, wo sie halten und Passagiere aufnehmen können.

Der Betrieb des öffentlichen Verkehrsmittels OEV wird durch den Betreiber BT mittels eines zweiten Computers C2 mit einem zweiten Prozessor P2 und einer über eine fünfte Schnittstelle S5 mit diesem verbundenen zweiten Speichereinheit SE2 über eine sechste Schnittstelle S6 kontrolliert. Diese Kontrolle wird durch die Kenntnis eines Fahrplans bewerkstelligt, der über eine vierte Schnittstelle S4 durch einen ersten Computer C1 vorgegeben wird.

Der erste Computer C1 ist mit einem ersten Prozessor P1, der über eine dritte Schnittstelle S3 mit einer ersten Speichereinrichtung SE1 verbunden ist, verbunden. Nach seiner Erzeugung kann der Fahrplan in der ersten Speichereinheit SE1 abgespeichert werden und bei Bedarf über die vierte Schnittstelle S4 dem zweiten Computer C2 zur Verfügung gestellt werden, wobei auch der zweite Computer C2 den Fahrplan in der zweiten Speichereinheit SE2 speichern kann. Zur Erstellung des Fahrplans bedient sich der erste Computer C1 über die Cloud CLD auch des Dienstleisters DL, der zu diesem Zweck einen dritten Computer C3 betreibt (dieser ist in Figur 1 als Black Box dargestellt). Der dritte Computer C3 ist über eine erste Schnittstelle S1 und der erste Computer C1 über eine zweite Schnittstelle S2 mit der Cloud CLD verbunden.

Der Dienstleister stellt einen Solver zur Verfügung, mit dem ein ganzzahliges lineares Programm zur Durchführung einer ganzzahligen linearen Optimierung durchgeführt werden kann. Zu diesem Zweck werden in dem ersten Computer C1 gespeicherte Randbedingungen aus der ersten Speichereinheit SE1 an den Dienstleister DL gesendet und in dem dritten Computer C3 der Optimierungsprozess durchgeführt. Ergebnis ist ein optimierter Fahrplan, der über die Cloud CLD dem ersten Computer C1 zur Verfügung gestellt und in der ersten Speichereinheit SE1 abgespeichert werden kann.

Statt der dargestellten Variante, bei der der Betreiber BT zur Optimierung des Fahrplans einen Dienstleister DL beschäftigt, kann auch in nicht dargestellter Weise die Optimierung in dem ersten Computer C1 durch den ersten Prozessor P1 durchgeführt werden. Zu diesem Zweck muss der Solver auf dem ersten Computer C1 installiert sein. Für die Optimierung ist der Dienstleister DL dann nicht erforderlich. Allerdings kann der Dienstleister DL auch zur Übertragung eines geeigneten Solvers über die Cloud CLD an den Betreiber BT genutzt werden.

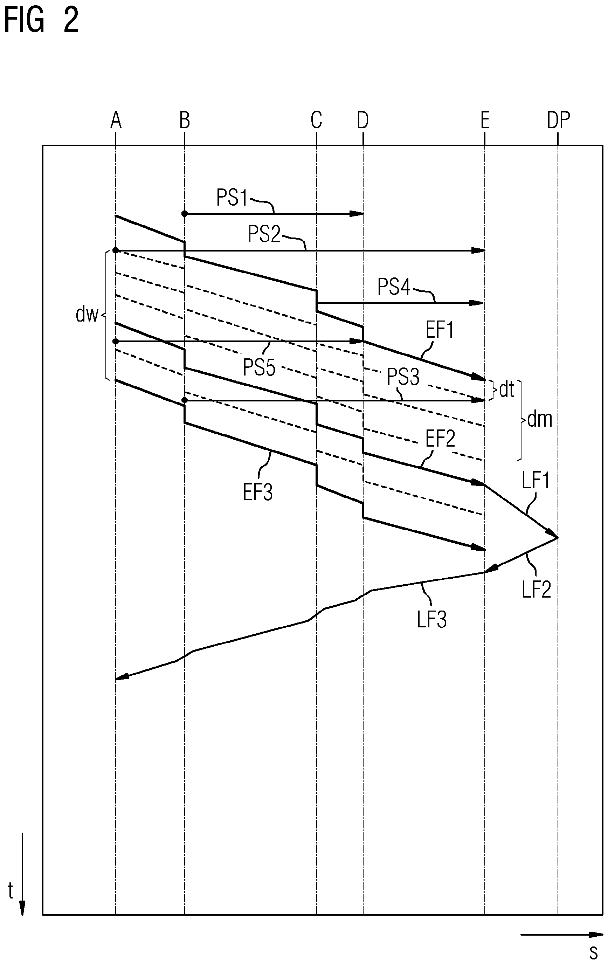

In Figur 2 sind ein Fahrplan bzw. die Randbedingungen für eine Optimierung desselben graphisch dargestellt. Die graphische Darstellung zeigt auf der x-Achse, die die Strecke s darstellt, wie Einzelfahrten EF1 ... EF3 sowie Leerfahrten LF1 ... LF3 zwischen den Stationen A ... E sowie einem Depot DP durchgeführt werden können. Auf der y-Achse ist die Zeit t dargestellt (Ausrichtung nach unten), sodass sich die Bewältigung einer Einzelfahrt mit konstanter Geschwindigkeit als lineare Funktion sowie Halte an den Stationen A ... E durch senkrechte Sprünge darstellen lassen.

Als gepunktete Linien sind potenzielle Einzelfahrten dargestellt. Der zeitliche Abstand dt zwischen zwei potenziellen Einzelfahrten wird vorgegeben, wobei eine Auswahl von Einzelfahrten den so definierten Basiszeitabstand dt berücksichtigt. Die tatsächlich durchgeführten Einzelfahrten EF1 ... EF3 weisen als notwendige Bedingung der linearen Optimierung den Basiszeitabstand dt oder ein ganzzahliges Vielfaches davon auf. Natürlich muss dabei auch der betriebstechnisch gesehen minimale Zeitabstand tatsächlicher Fahrten dm berücksichtigt werden, der beispielsweise aufgrund eines minimalen Sicherheitsabstands zwischen den die Einzelfahrten durchführenden Fahrzeuge vorgegeben wird. Im Ausführungsbeispiel gemäß Figur 2 wird deutlich, dass zwischen zwei durchgeführten Einzelfahrten EF1, EF2 mehrere (hier mindestens drei) Basiszeitabstände dt liegen müssen.

In Figur 2 sind außerdem Passagierströme PS1 ... PS5 dargestellt. Diese weisen jeweils eine Startstation und eine Endstation auf, wobei deren Richtung durch einen Pfeil angedeutet ist. Außerdem ist den Passagierströmen PS1 ... PS5 eine Passagierzahl zugeordnet, welche in Figur 2 nicht dargestellt ist.

Beispielhaft kann gemäß Figur 2 der zweite Passagierstrom PS2 betrachtet werden. Für diesen liegt die erste Einzelfahrt EF1 zu früh, sodass die Passagiere des zweiten Passagierstroms PS2 auf eine spätere Fahrt warten müssen. Hierbei wird berücksichtigt, dass eine maximale Wartezeit dw für Passagiere festgelegt wurde, die bei der Erstellung des Fahrplans nicht überschritten werden darf. In Figur 2 ist diese eingezeichnet, wobei deutlich wird, dass grundsätzlich die späteste Einzelfahrt, die unter Berücksichtigung der Basiszeitabstände dt möglich ist, die in Figur 2 dargestellte Einzelfahrt EF3 ist. Diese würde auch den dritten Passagierstrom PS3 berücksichtigen und wäre daher hinsichtlich eines minimierten Ressourcenverbrauchs optimal.

Anders könnte sich die Situation beispielsweise während des Berufsverkehrs darstellen. Wenn der fünfte Passagierstrom PS5 zusammen mit dem zweiten Passagierstrom PS2 zu viele Passagiere enthält, sodass der fünfte Passagierstrom PS5 (und evtl. auch der dritte Passagierstrom PS3) nicht mit der ersten Einzelfahrt EF1 befördert werden können, wird die zweite Einzelfahrt EF2 in den Fahrplan eingefügt, um den ersten Passagierstrom PS1, den zweiten Passagierstrom PS2 und den vierten Passagierstrom PS4 mit der ersten Einzelfahrt EF1 vollständig befördern zu können. Dieses Beispiel zeigt stark vereinfacht die Methodik bei Lösungsfindung. Tatsächlich sind bei der linearen Optimierung eine Vielzahl von Passagierströmen zu berücksichtigen, wobei eine Vereinfachung des Problems erfolgen kann, indem kleine Passagierströme, d. h. kurze Passagierströme und/oder Passagierströme mit sehr wenigen Personen, bei der Optimierungsaufgabe nicht berücksichtigt werden. Beispielsweise könnten Passagierströme weggelassen werden, die von der Endhaltestelle ausgehend nur eine bis drei Stationen dauern, weil erfahrungsgemäß das Fahrzeug am Anfang der Einzelfahrt immer genug Kapazität aufweist und die Passagiere wegen ihres frühen Ausstiegs keine Kapazitätsprobleme für die weitere Einzelfahrt hervorrufen können.

Außerdem ist in Figur 2 dargestellt, dass auch Leerfahrten LF1 ... LF3 berücksichtigt werden können. Diese dienen nicht der Aufnahme von Passagierströmen PS1 ... PS3, jedoch sind diese erforderlich, um eine Verfügbarkeit der Fahrzeuge für Einzelfahrten zu planen.

Die erste Leerfahrt LF1 führt von der Endstation E zum Depot DP. Die zweite Leerfahrt LF2 in umgekehrter Richtung von dem besagten Depot DP zur Endstation E, wo der Zug in nicht dargestellter Weise Einzelfahrten in die entgegengesetzte Richtung durchführen kann. In Figur 2 ist aber die Leerfahrt LF3 dargestellt, die über die Linie von den Stationen E bis A führt, um den Zug am anderen Ende der Linie verfügbar zu machen.

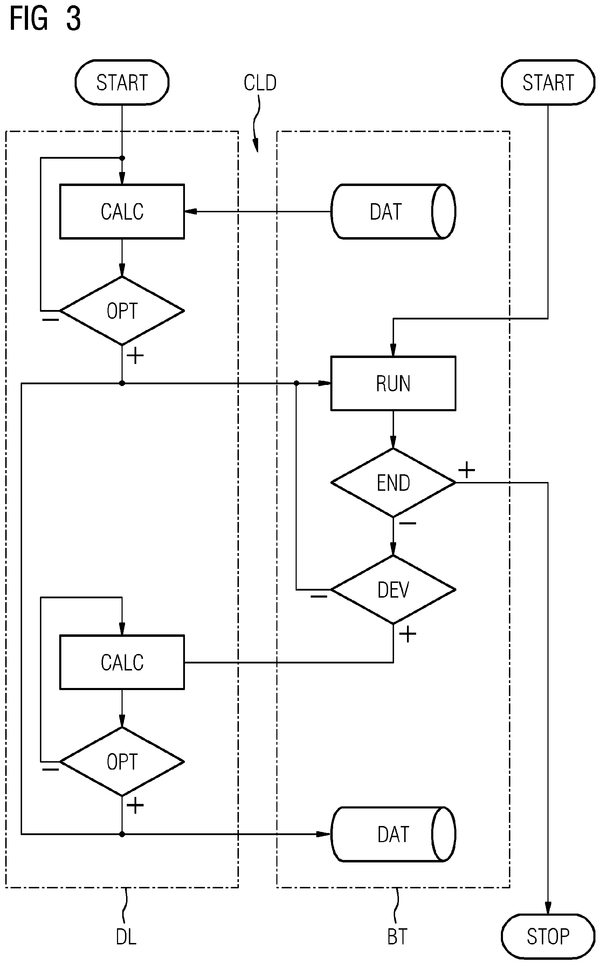

Der Figur 3 kann der Ablauf des erfindungsgemäßen Verfahrens entnommen werden. Wie zu erkennen ist, kann das Verfahren auf zwei verschiedene Arten gestartet werden. Eine Möglichkeit ist der Start beim Betreiber BT, um den Betrieb des öffentlichen Verkehrsmittels mittels des Betriebsschritts RUN aufzunehmen. Die andere Möglichkeit, das Verfahren zu starten, liegt beim Dienstleister DL mit einem Berechnungsschritt CALC für einen neuen oder modifizierten Fahrplan.

Im Folgenden soll mit den Handlungen des Dienstleisters DL begonnen werden. Zu bemerken ist, dass Figur 3 das Ausführungsbeispiel gemäß Figur 1 mit einer Hardwarekonfiguration erläutert, wobei sich die Cloud CLD zwischen den in Strichpunktlinien angedeuteten Systemgrenzen des Betreibers BT und des Dienstleisters DL befindet. Wie bereits zu Figur 1 angegeben, könnte auch die Berechnung CALC von Fahrplänen durch den Betreiber BT vorgenommen werden, wenn dieser die beim Dienstleister DL vorliegenden Rechenkapazitäten selbst vorhält.

Für den Berechnungsschritt CALC für den Fahrplan werden Daten DAT für den Betrieb des öffentlichen Verkehrsmittels eingelesen, die beispielsweise in der ersten Speichereinrichtung SE1 gemäß Figur 1 abgespeichert sein können. Nach dem Berechnungsschritt CALC erfolgt ein Abfrageschritt, ob ein Optimum durch die Berechnung erreicht wurde. Dieses Optimum muss nicht notwendigerweise das globale Optimum sein, welches an sich nicht bekannt ist, sondern ein Optimum, welches definierte Mindestanforderungen erfüllt (lokales Optimum).

Ist das Optimum erreicht, wird der Fahrplan dem Betreiber zur Verfügung gestellt und auf dessen Grundlage der Betriebsschritt RUN für das öffentliche Verkehrsmittel in Gang gesetzt. Ist das Optimum nicht erreicht, so wird der Berechnungsschritt CALC wiederholt. Hierbei handelt es sich um die grob vereinfachte Vorgehensweise eines Solvers, der durch den Dienstleister DL zur Verfügung gestellt wird.

Der Betriebsschritt für das öffentliche Verkehrsmittel steht stellvertretend für Einzelhandlungen, die beim Betrieb unter Einhaltung des Fahrplans erforderlich werden. Hierbei handelt es sich um Fahrbefehle, die den Fahrzeugen des öffentlichen Verkehrsmittels gegeben werden können. Bei der rekursiven Abwicklung der Betriebsschritte RUN wird regelmäßig ein Abfrageschritt durchlaufen, ob das Betriebsende erreicht ist. Ist dies der Fall, wird das Verfahren gestoppt. Ist dies nicht der Fall, wird außerdem in einem Abfrageschritt DEV gefragt, ob die Fahrplanabweichungen durch den realen Betrieb zu groß geworden sind, d. h. bestimmte Schwellwerte übersteigen. Ist dies nicht der Fall, wird der Fahrplan in einem nächsten Betriebsschritt RUN weiter abgewickelt. Ist dies jedoch der Fall, werden die realen Daten an den Dienstleister DL gegeben, der einen erneuten Berechnungsschritt CALC unter den neuen Randbedingungen während des Betriebs durchführt. Auch hier wird rekursiv gefragt, ob ein Optimum erreicht wurde. Ist dies nicht der Fall, so erfolgt ein weiterer Berechnungsschritt CALC. Ist dies der Fall, werden die neuen Fahrplandaten in dem nachfolgenden Betriebsschritt RUN des öffentlichen Verkehrsmittels berücksichtigt und somit der Fahrplan dynamisch angepasst. Außerdem können die aus den Fahrplanabweichungen gewonnenen Erkenntnisse als modifizierte Daten DAT für den Betrieb des öffentlichen Verkehrsmittels abgespeichert werden (bei dem Betreiber), um für zukünftige Fahrpläne eine breitere Datenbasis verfügbar zu machen.

Die nachfolgende Summenformel enthält die Größen, die erfindungsgemäß bei der Erstellung des Fahrplans berücksichtigt werden.

$$w_l \sum_{i=1}^{n} f_i l_i + w_p \sum_{j=1}^{m} \sum_{i \in F_j} p_{ij}(t_{ij} - t_j)$$

mit

$w_l$ = Gewichtungsfaktor für die Gesamtlänge der Einzelfahrten
$w_p$ = Gewichtungsfaktor für die gesamte Wartezeit von Passagieren
$n$ = Anzahl der potenziellen Einzelfahrten
$m$ = Anzahl der betrachteten Passagierströme
$f_i$ = ist eine potenzielle Einzelfahrt i genutzt oder nicht?

(Boolsche Variable)

$l_i$ = Länge einer potenziellen Einzelfahrt i
$F_j$ = Teilmenge der potenziellen Einzelfahrten, die mit einem Passagierstrom j kompatibel sind
$p_{ij}$ = Anzahl der Passagiere des Passagierstroms j, die die Einzelfahrt i nutzen (ganzzahlig)
$t_j$ = Startzeit des Passagierstroms j
$t_{ij}$ = Startzeit der Einzelfahrt i für Passagiere des Passagierstroms j

Der erste Summand dieser Formel beschreibt die Anzahl der potenziellen Einzelfahrten, die berücksichtigt werden können. Hierbei spielt der Basiszeitabstand dt eine Rolle, da potenzielle Einzelfahrten um diesen Basiszeitabstand zeitlich verschoben sind (vgl. Figur 2). Daraus wird auch deutlich, dass die Optimierung der dargestellten Summenformel umso komplexer wird, je mehr potenzielle Einzelfahrten aufgrund eines kleineren Basiszeitabstands dt berücksichtigt werden können. Ob die potenziellen Einzelfahrten i tatsächlich genutzt werden, wird durch die Boolsche Variable $f_i$ angegeben. Alle genutzten Einzelfahrten werden hinsichtlich ihrer Länge $l_i$ aufsummiert.

Der zweite Summand berücksichtigt die Passagierströme j. Summiert wird über alle Passagierströme, da alle Passagiere befördert werden müssen. Für jeden Passagierstrom wird die Summe über die Teilmenge der potenziellen Einzelfahrten gebildet, die mit dem betreffenden Passagierstrom j kompatibel sind. Dies bedeutet, dass die Passagiere des Passagierstroms (oder zumindest ein Teil dieser Passagiere, wenn die Kapazität der Einzelfahrt nicht ausreicht) befördert werden können. Hierfür muss die Startzeit $t_j$ vor der Startzeit $t_{ij}$ liegen und die Zielstation des Passagierstroms auf der potenziellen Einzelfahrt liegen. Außerdem soll die Wartezeit der Passagiere des betroffenen Passagierstroms j minimiert werden, weswegen bei der Summenbildung des zweiten Summanden für alle Passagiere die Differenz aus der Startzeit $t_{ij}$ der Einzelfahrt i und der Startzeit $t_j$ des Passagierstroms j, betrachtet wird.

Die nachfolgende Summenformel zeigt, dass ein weiteres Optimierungsziel als Summand hinzugefügt werden kann. Die ersten beiden Summanden entsprechen der vorstehend erläuterten Summenformel vollständig.

$$w_l \sum_{i=1}^{n} f_i l_i + w_p \sum_{j=1}^{m} \sum_{i \in F_j} p_{ij}(t_{ij} - t_j) + w_t \sum_{k=1}^{d} \sum_{i=1}^{n} o_{ik}$$

mit

$w_t$ = Gewichtungsfaktor für die Zahl der Fahrzeuge
d = Anzahl der Depots
$o_{ik}$= ist eine potenzielle Leerfahrt vom/zum Depot k zu einem Fahrweg i genutzt oder nicht? (Boolsche Variable)

Der letzte Summand betrifft das Optimierungsziel der eingesetzten Fahrzeuge. Hier wird zunächst über die Anzahl der Depots d summiert, in denen die Züge aufbewahrt werden. In jedem Depot wird die Summe über die Anzahl von Einzelfahrten n gebildet, die in dem betreffenden Depot beginnen oder in das betreffende Depot nach Beendigung zurückführen. Daher wird für jede potenzielle Leerfahrt eine Boolsche Variable $o_{ik}$ gesetzt, ob diese tatsächlich stattfindet, denn Fahrzeuge, die bereits im Einsatz sind, werden häufig nach Beendigung einer Einzelfahrt sofort für die nächste Einzelfahrt eingesetzt.

Die zwei bzw. drei Summanden der Summenformeln sind jeweils zu minimieren, um einen möglichst effektiven Betrieb durchführen zu können. Dabei können die Gewichtungsfaktoren vor jedem der Summanden zum Einsatz kommen, je nachdem, mit welchem Gewicht die einzelnen Summanden bei der Optimierung betrachtet werden sollen.

$w_l$ ist der Gewichtungsfaktor, der bei der Minimierung der Gesamtlänge der Einzelfahrten zum Einsatz kommt. $w_p$ ist der Gewichtungsfaktor für die gesamte Wartezeit der Passagiere, die im Rahmen des zulässigen Zeitfensters dw (vgl. Figur 2) ebenfalls möglichst kurz ausfallen soll. $w_t$ ist der Gewichtungsfaktor für die Anzahl der eingesetzten Fahrzeuge bzw. die Zahl der tatsächlich durchgeführten Leerfahrten, die es zu minimieren gilt.

Im Folgenden werden außerdem Randbedingungen angegeben, die bei der Minimierung der Werte der Summenformel, d. h. der Optimierung des Betriebs des öffentlichen Verkehrsmittels, beispielsweise durch den Solver zusätzlich zu berücksichtigen sind.

Die erste Bedingung besagt, dass bei allen Fahrten der betriebstechnisch minimale Zeitabstand zwischen den Einzelfahrten i1 und i2 eingehalten werden muss, sofern diese aufeinander folgen, wie nachfolgende Beziehung zeigt.

$$\bigwedge_{i_1=1}^{n} \bigwedge_{i_2=1}^{n} hw_{i_1 i_2} < hw_{i_1 i_2}^{min} \rightarrow f_{i_1} + f_{i_2} \leq 1$$

mit

$hw_{i1i2}$ = Zeitabstand zwischen den beiden Einzelfahrten $i_1$ und $i_2$
$hw_{i1i2}^{min}$ = betriebstechnisch minimaler Zeitabstand, der zwischen den Einzelfahrten $i_1$ und $i_2$ erforderlich ist (in Figur 2 auch als dm dargestellt)

Für alle Einzelfahrten $i_1$, $i_2$ wird daher geprüft, ob der tatsächliche Zeitabstand kleiner ist als der betriebstechnisch minimal geforderte Zeitabstand. Für diesen Fall darf nur eine der beiden potenziellen Einzelfahrten genutzt werden, d. h. die Boolsche Variable $f_{i1}$ und $f_{i2}$ der betrachteten Einzelfahrten muss dann in Summe kleiner oder gleich 1 sein (dies bedeutet, dass höchstens eine der beiden betrachteten potenziellen Einzelfahrten tatsächlich stattfindet).

Die Zahl der transportierten Passagiere darf nicht negativ werden, da es sich um ein reales Problem handelt. Dies wird für alle Einzelfahrten und für alle Passagierströme festgestellt. Diese Beziehung kann wie folgt dargestellt werden.

$$\bigwedge_{i=1}^{n} \bigwedge_{j=1}^{m} p_{ij} \geq 0$$

Wenn eine potenzielle Einzelfahrt i nicht kompatibel mit einem Passagierstrom j ist, dann dürfen mit dieser Einzelfahrt keine Passagiere befördert werden, was die folgende Beziehung zum Ausdruck bringt.

$$\bigwedge_{i=1}^{n} \bigwedge_{j=1}^{m} i \notin F_j \rightarrow p_{ij} = 0$$

Wenn eine potenzielle Einzelfahrt nicht ausgesucht wurde, dann dürfen mit dieser keine Passagiere transportiert werden, was durch die nachfolgende Beziehung zum Ausdruck gebracht wird.

$$\bigwedge_{i=1}^{n} \sum_{j=1}^{m} p_{ij} \leq P \cdot f_i$$

mit der Anzahl an Passagieren P über alle Passagierströme j, die sich ergibt aus:

$$P = \sum_{j=1}^{m} p_j$$

$P_j$ = alle Passagiere eines Passagierstroms

Alle Passagiere müssen unter Berücksichtigung der maximalen Wartezeit dw rechtzeitig transportiert werden. Dies gilt auch, wenn Passagierströme auf mehrere Einzelfahrten aufgeteilt werden müssen.

$$\bigwedge_{j=1}^{m} \sum_{i \in F_j} p_{ij} = p_j$$

Zuletzt darf die Kapazität der Fahrzeuge hinsichtlich ihrer maximal zulässigen Passagierzahl nicht überschritten werden, was die folgende Beziehung zum Ausdruck bringt.

$$\bigwedge_{i=1}^{n} \bigwedge_{a \in A_i} \sum_{j \in \{1,...,m\}|a \in A_j} p_{ij} \leq C$$

mit

$A_i$ = Menge der betroffenen Abschnitte der Einzelfahrt i
$A_j$ = Menge der betroffenen Abschnitte der Passagierströme j
C = Fahrzeugkapazität (Anzahl der Passagiere, die durch das Fahrzeug transportiert werden können)

Bezugszeichenliste

| | |
|---|---|
| OEV | öffentliches Verkehrsmittel |
| LN | Linie |
| FZ1 ... FZ2 | Fahrzeug |
| A ... E | Station |
| BT | Betreiber |
| DL | Dienstleister |
| CLD | Cloud |
| C1 ... C3 | Computer |
| P1 ... P2 | Prozessor |

| SE1 ... SE2 | Speichereinrichtung |
| S1 ... S6 | Schnittstelle |

| t | Zeit |
| s | Strecke |
| TP | Fahrweg eines Fahrzeugs |
| dt | Basiszeitabstand möglicher Fahrten |
| dm | betriebstechnisch minimaler Zeitabstand tatsächlicher Fahrten |
| dw | Maximale Wartezeit für Passagiere |
| PS1 ... PS5 | Passagierstrom |
| DP | Depot |
| EF | Einzelfahrt |
| LF | Leerfahrt |

| CALC | Berechnungsschritt für Fahrplan |
| OPT | Abfrageschritt: Optimum erreicht? |
| DAT | Daten für Betrieb des öffentlichen Verkehrsmittels |
| RUN | Betriebsschritt für öffentliches Verkehrsmittel |
| END | Abfrageschritt: Betriebsende erreicht? |
| DEV | Abfrageschritt Fahrplanabweichungen zu groß? |

**Patentansprüche**

1. Verfahren zum rechnergestützten Erstellen eines nichtzyklischen aus einer Anzahl Einzelfahrten (EF1 ... EF3) bestehenden Fahrplans für ein öffentliches Verkehrsmittel (OEV), bei dem die Stationen (A... E) einer Linie (LN) des öffentlichen Verkehrsmittels (OEV) berücksichtigt werden,
**dadurch gekennzeichnet,**
**dass** eine ganzzahlige lineare Optimierung durchgeführt wird, wobei zur Durchführung ein Ganzzahliges Lineares Programm verwendet wird, welches als Zielfunktionen

  • die Einzelfahrten (EF1 ... EF3) und die bei den Einzelfahrten (EF1 ... EF3) zurückgelegten Fahrkilometer,
  • eine Anzahl von jeweils zu einem Startzeitpunkt von einer der Stationen (A ... E) zu einer anderen der Stationen (A ... E) fließenden Passagierströmen (PS1 ... PS5) und die in den Passagierströmen (PS1 ... PS5) jeweils enthaltene Passagierzahl (pij)

berücksichtigt, wobei als Parameter eine maximale Wartezeit (dw) für Passagiere verwendet wird,
indem für potenzielle Einzelfahrten (EF1 ... EF3) geprüft wird,

  • ob die betreffende Einzelfahrt (EF1 ... EF3) genutzt wird,
  • wobei diese nur dann weiter betrachtet wird, wenn sie genutzt wird,

und indem für jeden Passagierstrom (PS1 ... PS5) geprüft wird, ob

  • der Passagierstrom (PS1 ... PS5) vollständig auf der betrachteten Einzelfahrt (EF1 ... EF3) liegt, und
  • die geplante Abfahrtszeit der betrachteten Einzelfahrt (EF1 ... EF3) an der betreffenden Station (A ... E) vor einem Einstiegszeitpunkt ($t_j$ + dw), die sich aus dem Startzeitpunkt eines betrachteten Passagierstroms (PS1 ... PS5) zuzüglich der maximalen Wartezeit für Passagiere ergibt, liegt,
  • wobei der Passagierstrom (PS1 ... PS5) nur dann der Einzelfahrt (EF1 ... EF3) zugeordnet wird,

wobei jeder der Passagierströme (PS1 ... PS5) mindestens einer Einzelfahrt (EF1 ... EF3) zugeordnet wird.

2. Verfahren nach Anspruch 1
**dadurch gekennzeichnet,**
**dass** als Parameter ein Basiszeitabstand (dt) zwischen potenziellen Einzelfahrten (EF1 ... EF3) berücksichtigt wird, wobei Einzelfahrten (EF1 ... EF3) den Basiszeitabstand (dt) oder ein ganzzahliges Vielfaches davon aufweisen.

3. Verfahren nach einem der voranstehenden Ansprüche,

**dadurch gekennzeichnet,**
**dass** der Fahrplan hinsichtlich der minimalen Gesamtlänge der Summe aller Einzelfahrten (EF1 ... EF3) optimiert wird.

4. Verfahren nach einem der voranstehenden Ansprüche,
**dadurch gekennzeichnet,**
**dass** beide Richtungen einer Linie (LN) berücksichtigt werden, wobei bei der Berücksichtigung der Passagierströme (PS1 ... PS5) geprüft wird, welche Richtung diese jeweils aufweisen.

5. Verfahren nach einem der voranstehenden Ansprüche,
**dadurch gekennzeichnet,**
**dass** zusätzlich zu den Einzelfahrten (EF1 ... EF3) auch Leerfahrten (LF1 ... LF3) ohne Passagiere berücksichtigt werden.

6. Verfahren nach einem der voranstehenden Ansprüche,
**dadurch gekennzeichnet,**
**dass** als Zielfunktion zusätzlich die Anzahl von zur Verfügung stehenden Fahrzeugen (FZ1, FZ2) berücksichtigt wird.

7. Verfahren nach einem der voranstehenden Ansprüche,
**dadurch gekennzeichnet,**
**dass** das Auffinden eines Optimums durch einen Solver, insbesondere einen Gurobi-Solver durchgeführt wird.

8. Verfahren nach einem der voranstehenden Ansprüche,
**dadurch gekennzeichnet,**
**dass** als Fahrplan ein Tagesfahrplan erstellt wird.

9. Verfahren nach einem der voranstehenden Ansprüche,
**dadurch gekennzeichnet,**
**dass** die Passagierströme (PS1 ... PS5) unter Berücksichtigung von Umsteigebeziehungen zu anderen Linien des öffentlichen Verkehrs ermittelt werden.

10. Verfahren nach einem der voranstehenden Ansprüche,
**dadurch gekennzeichnet,**
**dass** Fahrzeuge (FZ1, FZ2) unterschiedlichen Typs auf der Linie (LN) berücksichtigt werden.

11. Verfahren nach einem der voranstehenden Ansprüche,
**dadurch gekennzeichnet,**
**dass** das Erstellen des Fahrplans während des Ablaufens eines bestehenden Fahrplans unter Berücksichtigung aktuell gemessener oder geschätzter Passagierströme (PS1 ... PS5) durchgeführt wird.

12. Computerprogrammprodukt mit Programmbefehlen zur Durchführung des Verfahrens nach einem der Ansprüche 1 - 11.

13. Bereitstellungsvorrichtung für das Computerprogrammprodukt Anspruch 12, wobei die Bereitstellungsvorrichtung das Computerprogrammprodukt speichert und/oder bereitstellt.

## FIG 1

# FIG 2

FIG 3

Europäisches Patentamt
European Patent Office
Office européen des brevets

# EUROPÄISCHER RECHERCHENBERICHT

Nummer der Anmeldung

EP 21 15 7551

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 151 174 A1 (NEC EUROPE LTD [DE]) 5. April 2017 (2017-04-05) * Zusammenfassung; Abbildung 1 * ----- | 1-13 | INV. G06Q10/04 G06Q50/30 |
| A | GB 2 341 261 A (DAIMLER CHRYSLER AG [DE]) 8. März 2000 (2000-03-08) * Zusammenfassung * ----- | 1-13 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 10. Juni 2021 | Weidmann, Matthias |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes
  Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 15 7551

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2021

| Im Recherchenbericht angeführtes Patentdokument | Datum der Veröffentlichung | Mitglied(er) der Patentfamilie | Datum der Veröffentlichung |
|---|---|---|---|
| EP 3151174 A1 | 05-04-2017 | KEINE | |
| GB 2341261 A | 08-03-2000 | CH 695030 A5 | 15-11-2005 |
| | | DE 19839525 C1 | 13-04-2000 |
| | | FR 2782826 A1 | 03-03-2000 |
| | | GB 2341261 A | 08-03-2000 |
| | | IT RM990539 A1 | 27-02-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KEPING LI et al.** Metro Timetabling for Time-Varying Passenger Demand and Congestion at Stations. *Hindawi Journal of Advanced Transportation,* 2018